# EUROPEAN PATENT APPLICATION

(11) **EP 2 105 456 A1**
(43) Date of publication of application: **30.09.2009**
(21) Application number: 08153228.5
(22) Date of filing: 25.03.2008
(51) Int. Cl.: C08J 3/12, C10G 1/00, B02C 19/06

(54) **Composition comprising solid biomass coated onto a solid catalyst**

(71) Applicant: KiOR Inc., 3871 KM Hoevelaken (NL)
(72) Inventor: O'Connor, Paul, 3871 KM HOEVELAKEN (NL)
(74) Representative: Rasser, Jacobus Cornelis

(57) **Abstract**

A process is disclosed for decreasing the particle size of solid biomass material.

The process comprises providing small particles, of solid biomass material, and mixing these particles with fluidizable particles of a particulate inorganic material, preferably a material having catalytic properties. The mixture of particles is subjected to a gas stream, preferably causing fluidization. In the process the inorganic particles become coated with biomass material.

The biomass-coated particles are suitable for subsequent conversion of the biomass to liquid products, such as bio-oil.

## Description

### BACKGROUND OF THE INVENTION

### 1. Field of the Invention

The invention relates generally to a process for reducing the particle size of solid biomass material, and to compositions obtained by the process. The compositions comprise solid biomass coated onto solid catalyst particles.

### 2. Description of the Related Art

PCT-EP2007-057269 describes a process whereby biomass and inorganic particulate materials are contacted in such a way, for example by agitation with a gas, that the particle size of the biomass is reduced. One of the downsides of this process that catalyst fines become mixed with biomass ash in subsequent processing. The catalyst fines are difficult to separate from the ash, resulting in a loss of catalyst material. Another disadvantage of the earlier method is that biomass particles smaller than about 500 micrometers may become separated from the reaction mixture and escape conversion.

In addition, it is desirable to use attrition-resistant catalyst particles in catalytic cracking processes, so as to maintain the desired catalyst particle size as much as possible during the process.

In addition, it is desirable to be able to separate biomass fines such as the inorganic ash from the catalyst particles. If the catalyst particles are larger than the fines this can be easily done by the well known particle separation methods.

Thus, there is a particular need for a process for reducing the particle size of a solid biomass material and for providing intimate contact with a particulate solid catalyst material. There is a further need for providing a process that avoids the formation of catalyst fines, and allows for the capture of biomass fines.

There is a further need for biomass material in a form that allows it to be included in the feed of a refinery process, such as fluid catalytic cracking (FCC), hydroprocessing, thermal conversion, coking, reforming, steam reforming, and the like, while minimizing or avoiding problems typically associated with the presence of solid particles in the feed, such as catalyst plugging and pressure drop build-up.

### BRIEF SUMMARY OF THE INVENTION

The present invention addresses these problems by providing a process for reducing the particle size of a biomass material, said process comprising the steps of:
a) providing a biomass material;
b) reducing the particle size of the biomass material c) mixing the biomass material of step b) with a fluidizable inorganic particulate material
d) subjecting the mixture of step c) to a gas stream, whereby the particle size of the biomass material is reduced further.

Another aspect of the invention comprises a composition of matter comprising solid biomass material coated onto a particulate solid catalyst material.

Yet another aspect of the invention comprises subjecting the biomass-coated particulate catalyst material to a conversion process, such as a fluid catalytic cracking process.

### DESCRIPTION OF ILLUSTRATIVE EMBODIMENTS

The following is a description of certain embodiments of the invention, given by way of example only.

In one embodiment the invention is a process for reducing the particle size of a biomass material, said process comprising the steps of:
a) providing a biomass material;
b) reducing the particle size of the biomass material to a particle size range preferably suitable for fluidization of the biomass material;
c) mixing the biomass material of step b) with a fluidizable inorganic particulate material;
d) subjecting the mixture of step c) to fluidization conditions, whereby the particle size of the biomass material is reduced further.

The biomass material of step a) may be any suitable biomass material. Examples include biomass of aquatic origin, specifically biomass material derived from algae, and biomass derived from land-based plants. The latter type generally contains ligno-cellulosic material. It is desirable to use agricultural or forestry waste products as a source of biomass material. Examples include straw, corn husks, bagasse, wood chips, saw dust, and the like.

The purpose of step b) is to convert the solid biomass to a particle size range preferably suitable for fluidization conditions. As the density of biomass is much less than that of the inorganic particulate material, fluidizable biomass particles in general have a larger particle diameter. In general, biomass material is fluidizable under normal conditions if it has a particle size in the range of from 0.5 mm to about 0.05 mm. Suitable processes for obtaining such particle sizes include abrasion, shredding, grinding, milling, and kneading.

In step c), the preferably fluidizable solid biomass material is mixed with a fluidizable particulate inorganic material. The particulate inorganic material generally has a mean particle size in the range of from 10 to 1000 microns. The particulate inorganic material may be inert, or it may have catalytic properties. For the purpose of the present invention a particulate inorganic material is considered as having catalytic properties if it catalyzes the subsequent conversion of the solid biomass to bio-oil, as explained herein below. A particulate inorganic material is considered as being inert if it does not substantially catalyze this subsequent conversion. Sand (SiO₂) is an example of an inert particulate inorganic material.

It is preferred to employ particulate inorganic materials having catalytic properties. Examples include zeolites, clays, hydrotalcites and hydrotalcite-like materials, refractory oxides such as alumina, silica-alumina, zirconia, earth alkaline alkali metal hydroxides and salts, in particular CaO, K₂CO₃, and the like. The catalytic properties of these materials may be modified by well-known techniques, such as adding additives, depositing metals or metal oxides, modifying the pore size distribution and/or pore volume, and the like.

In a specific embodiment the catalytic material comprises an alkali metal carbonate and an inorganic base, such as the hydroxide of an earth alkaline metal (Ca, Mg) or of aluminum.

Particularly desirable inorganic materials include used sand-blasting grit, and used catalyst materials from other processes (such as E-cat from a refinery's FCC process), because these materials are available at low cost, and have considerable catalytic properties. In the case of used sand-blasting grit the catalytic properties stem from metals that have become mixed with the grit during its use in sand-blasting.

Other desirable inorganic materials are Inorganic Carbonates, such as Sodium Carbonate, Potassium Carbonate, Calcium Carbonate, Magnesium Carbonate and the like.

It may be desirable to increase the attrition resistance of the particulate inorganic material. Techniques for increasing the attrition resistance of particulate inorganic materials are well known in the art, in particular in the field of fluid catalytic cracking (FCC).

Any suitable technique may be used for mixing the fluidizable solid biomass particles with the fluidizable inorganic particulate material. However, the preferred method comprises feeding gas-borne streams of both types of particles into a fluidized bed reactor, such as an FCC riser. In general, the solid particulate biomass and the inorganic particulate material are mixed in a weight ratio in the range of from 1:50 to 50:1.

The mixture obtained in step c) is subjected to abrasion via fluidization, fast fluidization and/or solids flow conditions. The fluidizing gas may be air or some other oxygen-containing gas. Preferably, however, the fluidizing gas is oxygen-poor or substantially oxygen-free. During this fluidization step the impact of particles of the inorganic material colliding with the biomass material results in a further reduction of the particle size of the biomass material. Initially the inorganic particles are smaller than the biomass particles, and inorganic particles may tend to become embedded in the biomass particles, as described in PCT-EP2007-057269. As the abrasion step continues, the biomass particles become smaller. The inorganic particles, however, being much harder than the biomass particles, substantially maintain their size.

The process of step d) is preferably carried out at ambient temperature, or a slightly increased temperature.

With time, the inorganic particles become coated with biomass material. As used herein, the terms "coated" and "coated onto" refer to inorganic particles having biomass material at least at their outer surface, optionally also within their pores, if the inorganic material is porous. The coating can be observed by techniques such as optical microscopy, electron microscopy, TEM, SEM, and the like.

In another aspect, this invention relates to inorganic particulate materials coated with solid biomass material, as obtained, for example, by the above-described process. The particles are particularly suitable for use in a conversion process for converting biomass to, for example, bio-oil. Preferably the conversion process uses a fluidized bed, as the particles have the appropriate size for fluidization.

The subsequent conversion process may be carried out ion conventional refinery equipment, such as a fluid catalytic cracker, a thermal cracker, a coker, a flexi coker an ebullated bed conversion unit such as a hydrotreater, hydrocracker, an H-Oil unit and/or LC-finer, fixed bed hydro conversion units and the like.

Thus, the invention has been described by reference to certain embodiments discussed above. It will be recognized that these embodiments are susceptible to various modifications and alternative forms well known to those of skill in the art.. Accordingly, although specific embodiments have been described, these are examples only and are not limiting upon the scope of the invention.

## Claims

1. A process for reducing the particle size of a biomass material, said process comprising the steps of:
a) providing a biomass material;
b) reducing the particle size of the biomass material
c) mixing the biomass material of step b) with a fluidizable inorganic particulate material;
d) subjecting the mixture of step c) to fluidization and/or flow conditions, whereby the particle size of the biomass material is reduced further.

2. The process of claim 1 wherein the particle size of the biomass material obtained in step b) is in the range of 50 to 5000 microns.

3. The process of claim 1 wherein the fluidizable inorganic particulate material has a particle size in the range of from 10 to 200 microns.

4. The process of claim 1 wherein the biomass material is of aquatic origin

5. The process of any one of the preceding claims wherein the biomass material is a lignocellulosic biomass material.

6. The process of any one of the preceding claims wherein the biomass material is a mixture of biomass solids and biomass liquids.

7. The process of any one of the preceding claims wherein the biomass material contains and/or is mixed with municipal waste containing natural and synthetic polymers.

8. The process of any one of the preceding claims wherein the biomass material of step a) has a moisture content of less than 50 wt%.

9. The process of any one of the preceding claims wherein the biomass material of step a) has a moisture content of less than 10 wt%.

10. The process of any one of the preceding claims wherein the inorganic particulate material comprises a catalytic material.

11. The process of claim 6 wherein the catalytic material is selected from the group consisting of zeolites, clays, hydrotalcites and hydrotalcite-like materials, refractory oxides such as alumina, silica-alumina, zirconia, earth alkaline alkali metal hydroxides and salts and mixtures thereof.

12. The process of claim 6 wherein the catalytic material comprises an alkali metal carbonate and a hydroxide of an earth alkaline metal or aluminum.

13. The process of any one of the preceding claims wherein the mixture of step c) has a weight ratio biomass material : inorganic particulate material of from 1:50 to 50:1.

14. The process of any one of the preceding claims wherein the mixture of step c) has a weight ratio biomass material : inorganic particulate material of from 80:20 to 20:80.

15. The process of any one of the preceding claims wherein step d) is carried out at a temperature below 200 °C, preferably below 150 °C, more preferably below 100 °C.

16. The process of any one of the preceding claims whereby during step d) the biomass material becomes coated onto the particulate inorganic material.

17. A composition consisting of solid biomass particles coated onto inorganic particulate material

18. A composition consisting of lingo-cellulosic particles coated onto inorganic particulate material

19. The process of any one of the preceding claims comprising the additional step of:
e) subjecting the mixture obtained in step d) to a fluid cracking process at a temperature above 200 °C.

20. The process of claim 11 wherein step e) is carried out at a temperature in the range of from 200 to 450 °C.

21. The process of claim 11 wherein step e) is carried out at a temperature in the range of from 200 to 400 °C.

22. The process of any one of claims 1 through 16 comprising the additional step of:
e) subjecting the mixture obtained in step d) to a hydro treatment and/or conversion process at a temperature above 200 °C.

23. The process of any one of claims 1 through 16 comprising the additional step of:
e) subjecting the mixture obtained in step d) to a hydrothermal conversion process at a temperature above 100 °C.

24. The process of claim 23 wherein the hydrothermal conversion process is carried out at a temperature above 200 °C.

25. The process of any of the preceding claims whereby step d) is performed in a fast fluidized bed at catalyst flow velocities of at least 0.5 meters/second, preferably 1 m/sec

26. Process of any of the preceding claims whereby step d) is performed in a catalyst riser or downer at catalyst flow velocities of at least 2 meters/second, preferably higher than 10 m/sec

27. Process of any of the above claims whereby step b) is performed by milling the biomass in a fluidized or moving bed with inorganic material.

28. Process of any of the above claims whereby in step b) a fluidizable biomass is produced.
